# EUROPEAN PATENT APPLICATION

(11) **EP 4 790 303 A1**
(43) Date of publication of application: **12.08.2026**
(21) Application number: 26156536.0
(22) Date of filing: 05.02.2026
(51) Int. Cl.: F16M 11/12, F16M 11/16, F16M 11/24

(54) **MULTI-SCREEN MOUNT**

(30) Priority: 05.02.2025 US 202563754399 P
(71) Applicant: Colebrook Bosson & Saunders (Products) Limited, London, Greater London SE1 1SD (GB)
(72) Inventor: Williams, Peter Robert, London, N11 2ST (GB); Lau, Alex, London, SW13 9AB (GB); Knezic, Kruno, London, SE3 9FN (GB); Pryce, Peter, Uckfield, TN22 5ND (GB)
(74) Representative: Boult Wade Tennant LLP

(57) **Abstract**

An adjustable mount assembly (100) to support a first screen relative to a foundational element, the mount assembly including a frame (116), a coupler (144) coupled to the frame where the coupler provides a first degree of freedom between the frame and the foundational element, a fixture (120) coupled to the frame, where the fixture includes a mount plate configured for attachment to the first screen, where the fixture provides a second degree of freedom between the mount plate and the frame, and where adjustment about the first degree of freedom is independent of adjustment of the second degree of freedom.

## Description

### RELATED APPLICATIONS

This application claims priority to U.S. Provisional Application No. 63/754,399, filed on February 5, 2025. The entire contents of which are hereby incorporated by reference.

### FIELD

The present invention is generally directed to a screen mount, and specifically to a screen mount that allows the adjustment of two of more screens as a unit.

### SUMMARY

In one aspect, an adjustable mount assembly to support a first screen relative to a foundational element, the mount assembly including a frame, a coupler coupled to the frame, where the coupler provides a first degree of freedom between the frame and the foundational element, a fixture coupled to the frame, where the fixture includes a mount plate configured for attachment to the first screen, where the fixture provides a second degree of freedom between the mount plate and the frame, and where adjustment about the first degree of freedom is independent of adjustment of the second degree of freedom.

Alternative or additionally, in any combination, where the fixture provides four degrees of freedom between the mount plate and the frame.

Alternative or additionally, in any combination, where the four degrees of freedom are independently adjustable.

Alternative or additionally, in any combination, where the frame defines a longitudinal reference axis extending along a length thereof, and where the fixture is movable axially along the longitudinal reference axis relative to the frame.

Alternative or additionally, in any combination, where the fixture is adjustable between a locked configuration, in which the mount plate is fixed relative to the frame, and an unlocked configuration, in which the mount plate is movable relative to the frame.

Alternative or additionally, in any combination, where the coupler is adjustable between a locked configuration, in which the frame is fixed relative to the foundational element, unlocked configuration, in which the frame is movable relative to the foundational element, and where the coupler may be adjusted between the locked and unlocked configurations independent of adjusting the fixture between the locked and unlocked configurations.

Alternative or additionally, in any combination, where the coupler includes a first interface configured for attachment to the foundational element, and where the frame is movable relative to the first interface.

Alternative or additionally, in any combination, where the fixture is a first fixture and the mount plate is a first mount plate, the adjustable mount assembly further comprising a second fixture attached to the frame, where the second fixture includes a second mount plate configured for attachment to a second screen, and where the second fixture provides a third degree of freedom between the second mount plate and the frame.

Alternative or additionally, in any combination, where the second mount plate is movable relative to the first mount plate.

Alternative or additionally, in any combination, where the frame is movable about the first degree of freedom without altering the relative position and orientation between the first mount plate and the second mount plate.

Alternative or additionally, in any combination, further including a third fixture attached to the frame, where the third fixture includes a third mount plate configured for attachment to a third screen, and where the third fixture provides a fourth degree of freedom between the second mount plate and the frame.

Alternative or additionally, in any combination, where the frame includes a first end and a second end opposite the first end, and where the first fixture is movable along a length of the frame between the third fixture and the first end.

In another aspect, an adjustable mount assembly to support a first screen and a second screen relative to a foundational element, the mount assembly includes a frame, a first mount plate coupled to the frame and configured for attachment to one of the first screen and the second screen, a second mount plate coupled to the frame and configured for attachment to the other of the first screen and the second screen, a first set of adjustments configured to adjust at least one of a position and orientation of the first mount plate relative to the second mount plate, and a second set of adjustments configured to adjust at least one of a position and orientation of the frame relative to the foundational element while maintaining the relative position and orientation between the first mount plate and the second mount plate.

Alternative or additionally, in any combination, further including a first fixture coupling the first mount plate to the frame, a second fixture coupling the second mount plate to the frame, and where the first fixture and the second fixture provide the first set of adjustments.

Alternative or additionally, in any combination, where the first fixture provides a first set of one or more degrees of freedom between the first mount plate and the frame, where the second fixture provides a second set of one or more degrees of freedom between the second mount plate and the frame, and where the first set of one or more degrees of freedom and the second set of one or more degrees of freedom provide the first set of adjustments.

Alternative or additionally, in any combination, where the distance between the first mount plate and the second mount plate may be changed using the first set of adjustments.

Alternative or additionally, in any combination, where further including a coupler positioned between the frame and the foundational element, where the coupler provides the second set of adjustments.

In another aspect, a method of supporting a first screen and a second screen relative to a foundational element, the method including providing a frame, supporting the frame relative to the foundational element such that at least one of a position and orientation of the frame is adjustable relative thereto, coupling a first fixture to the frame, the first fixture including a first mount plate configured for attachment to one of the first screen and the second screen, coupling a second fixture to the frame, the second fixture including a second mount plate configured for attachment to the other of the first screen and the second screen, adjusting at least one of a position and orientation of the first mount plate relative to the second mount plate using the first fixture and the second fixture to produce a screen unit, adjusting at least one of the orientation of the screen unit relative to the foundational element without changing the relative position and orientation of the first mount plate relative to the second mount plate.

Alternative or additionally, in any combination, where adjusting the orientation of the screen unit relative to the foundation element includes adjusting the position and orientation of the frame relative to the foundational element.

Alternative or additionally, in any combination, where adjusting the position and orientation of the first mount plate relative to the second mount plate includes adjusting the position and orientation of the first mount plate relative to the frame and adjusting the position and orientation of the second mount plate relative to the frame.

### BRIEF DESCRIPTION OF THE DRAWINGS

FIG. 1A is a perspective view of a multi-screen mount configured for supporting two screens.
FIGS. 2A and 2B are detailed perspective views of the second end of the support of the multi-screen mount of FIG. 1.
FIG. 3 is a rear perspective view of the frame of the multi-screen mount of FIG. 1.
FIG. 4 is a top view of the frame of FIG. 3.
FIGS. 5A and 5B are detailed view of the coupler of the frame of FIG. 3.
FIG. 6 is a perspective view of another embodiment of the multi-screen mount configured for supporting three screens.
FIG. 7 is an exploded view of the multi-screen mount of FIG. 6.
FIGS. 8 and 9 illustrate the fixtures of the multi-screen mount of FIG. 1 is different positions.
FIG. 10 is a detailed perspective view of a central fixture of the multi-screen mount of FIG. 6.
FIG. 11A is a section view taken along line 11-11 of FIG. 10.
FIG. 11 B is a side view of the central fixture of FIG. 10.
FIG. 11C is a rear perspective view of the central fixture of FIG. 10.
FIGS. 12A and 12B illustrate one degree of freedom of the center screen attached to the multi-screen mount of FIG. 6.
FIGS. 13A and 13B is a front view of the central fixture of FIG. 10.
FIGS. 14A and 14B illustrates one degree of freedom of the center screen attached to the multi-screen mount of FIG. 6.
FIG. 15 is a detailed perspective view of a lateral fixture of the multi-screen mount of FIG. 6.
FIG. 16 is a section view taken along line 16-16 of FIG. 15.
FIGS. 17A-C are top section views of the lateral fixture of FIG. 15.
FIGS. 18A-B are bottom perspective views of the lateral fixtures of FIG. 15.
FIGS. 19A-C illustrate the section view of the lateral mount of FIG. 16 with the locking mechanism in various stages of actuation.
FIGS. 20A-D illustrate the various stages of install of a single monitor mount.
FIGS. 21A-C illustrate the various stages of installing the single mount of FIGS. 20A-D to a monitor or screen.
FIGS. 22A-22B illustrate an adapter plate for use with the multi-screen mounts of FIGS. 1 and 6.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

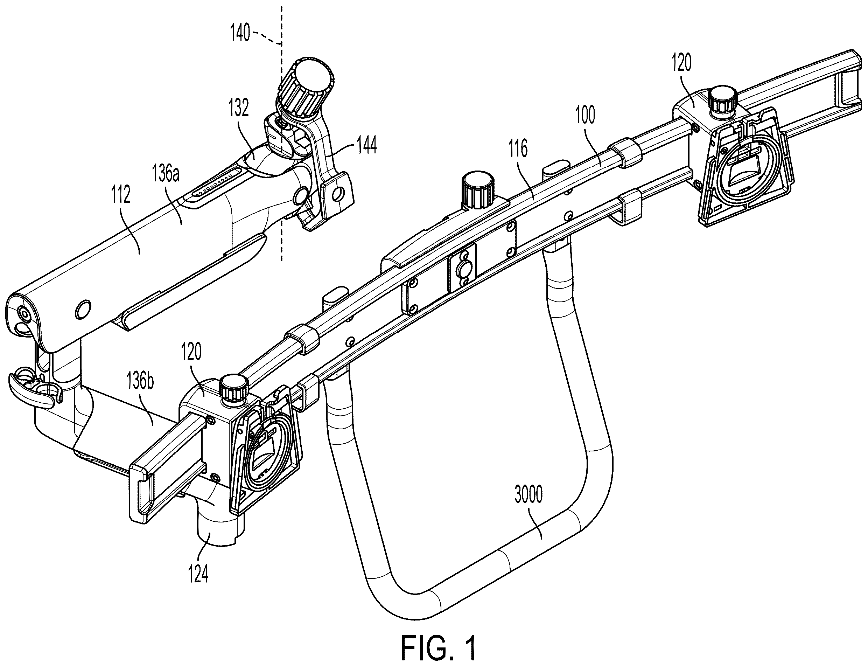

FIGS. 1, 6, and 7 illustrate an adjustable mount assembly 100 configured to support and orient two or more individual screens or monitors 104 while providing two tiers of adjustment thereto. More specifically, in some embodiments the first tier of adjustment of the mount assembly 100 includes the ability to adjust and secure the position and orientation of the individual screens 104 with respect to one another to form a fixed screen unit 108. Once secured, the second tier of adjustment includes the ability to move the resulting fixed screen unit 108 as a single entity without altering the relative positions and/or orientations between the individual screens 104 forming the unit 108. In the illustrated embodiment, the mount assembly 100 includes a support 112, a frame 116 coupled to the support 112, and one or more fixtures 120 coupled to the frame 116. During use, each fixture 120 is configured to serve as a mounting location where a corresponding screen 104 of the two or more screens 104 may be attached to the assembly 100.

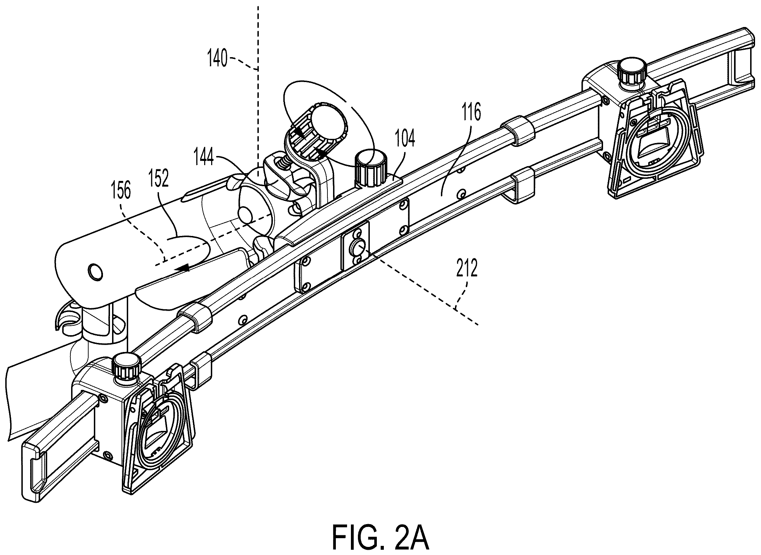

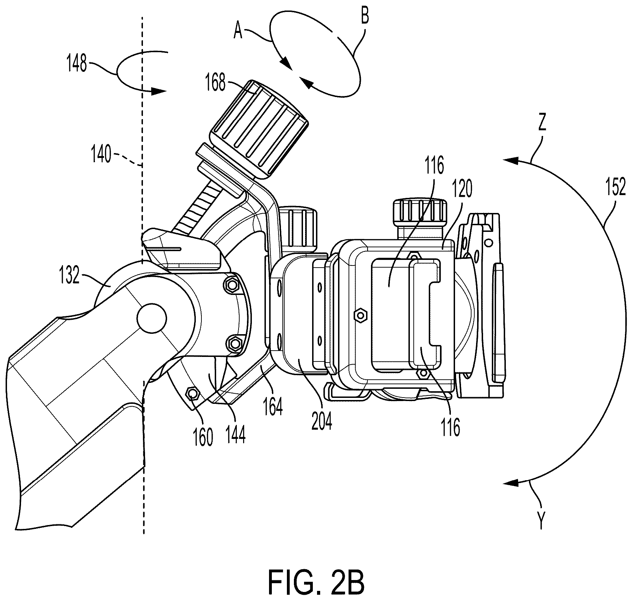

As shown in FIGS. 1, 2A and 2B, the support 112 of the mount assembly 100 is an elongated member having a first end 124 fixedly coupled to a foundational element (e.g., a table, a wall, a floor, and the like), and a second end 132 opposite the first end 124 to which the frame 116 may be attached. In some embodiments, the support 112 may be articulatable such that the second end 132 is movable relative to the first end 124. In still other embodiments, the support 112 includes a series of arms 136a, 136b and linkages (not shown) coupled to one another such that at least a portion of the orientation of the second end 132 is maintained as it moves relative to the first end 124. Specifically, in the illustrated embodiment, the support 112 is configured so that the orientation of a mount axis 140 of the second end 132 remains substantially constant. In the illustrated embodiment, the mount axis 140 remains substantially vertical (±0.5 degrees, ±0.75 degrees, ±1 degree, ±2 degrees, ±4 degrees, ±5 degrees, ±10 degrees) as the second end 132 moves relative to the first end 124.

The support 112 also includes a mount 144 coupled to the second end 132 to which the frame 116 (e.g., the coupler 204 of the frame 116) may be releasably attached. During use, the mount 144 provides one or more (e.g., two) degrees of freedom of movement between the second end 132 and the frame 116. In the illustrated embodiment, the mount 144 provides a first degree of freedom 148 allowing the frame 116 to rotate with respect to the second end 132 about the mount axis 140 and a second degree of freedom 152 allowing the frame 116 to rotate with respect to the second end 132 about a first sub-axis 156 oriented perpendicular to the mount axis 140. In some embodiments, the first sub-axis 156 is substantially horizontal in orientation (±0.5 degrees, ±0.75 degrees, ±1 degree, ±2 degrees, ±4 degrees, ±5 degrees, ±10 degrees).

In some embodiments, the mount 144 includes a first portion 160 coupled to the second end 132 of the support 112 and defining the first sub-axis 156, a second portion 164 movable relative to the first portion 160, and an actuator 168 operatively engaging both the first portion 160 and the second portion 164. Once assembled, the first portion 160 is mounted for rotation relative to the second end 132 about the mount axis 140 and the second portion 164 is mounted for rotation relative to the first portion 160 about the first sub-axis 156.

In the illustrated embodiment, the actuator 168 includes a threaded rod in threadable engagement with one of the first portion 160 and the second portion 164 such that rotation of the rod 172 with respect to the one of the first portion 160 and the second portion 164 causes the second portion 164 to move (e.g., rotate about the first sub-axis 156) with respect to the first portion 160. Specifically, rotating the rod 172 in a first direction A causes the second portion 164 to rotate in a first direction Z about the first sub-axis 156 and rotating the rod 172 in a second direction B, opposite the first direction A, causes the second portion 164 to rotate in a second direction Y, opposite the first direction Z, about the first sub-axis 156. In still other embodiments, the threads of the rod 172 are such that when the rod 172 is not rotated the relative positions of the first portion 160 and the second portion 164 remain fixed.

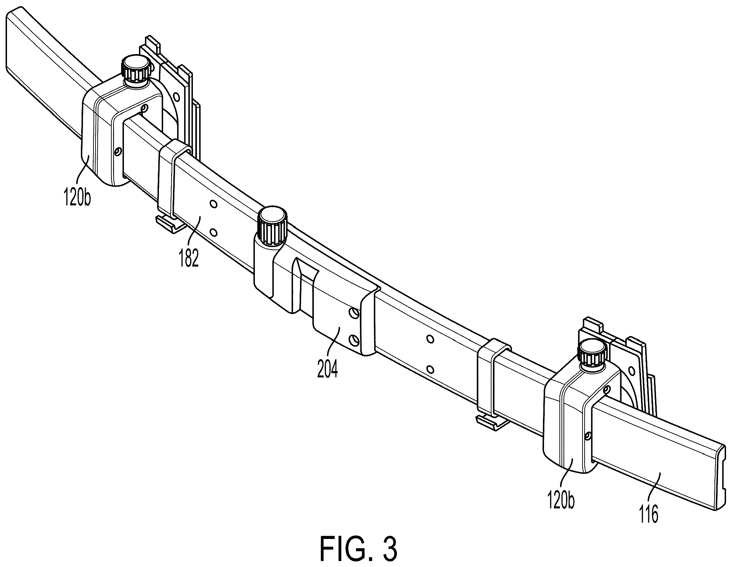

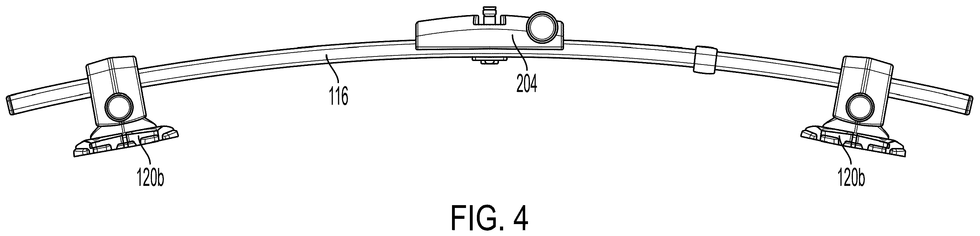

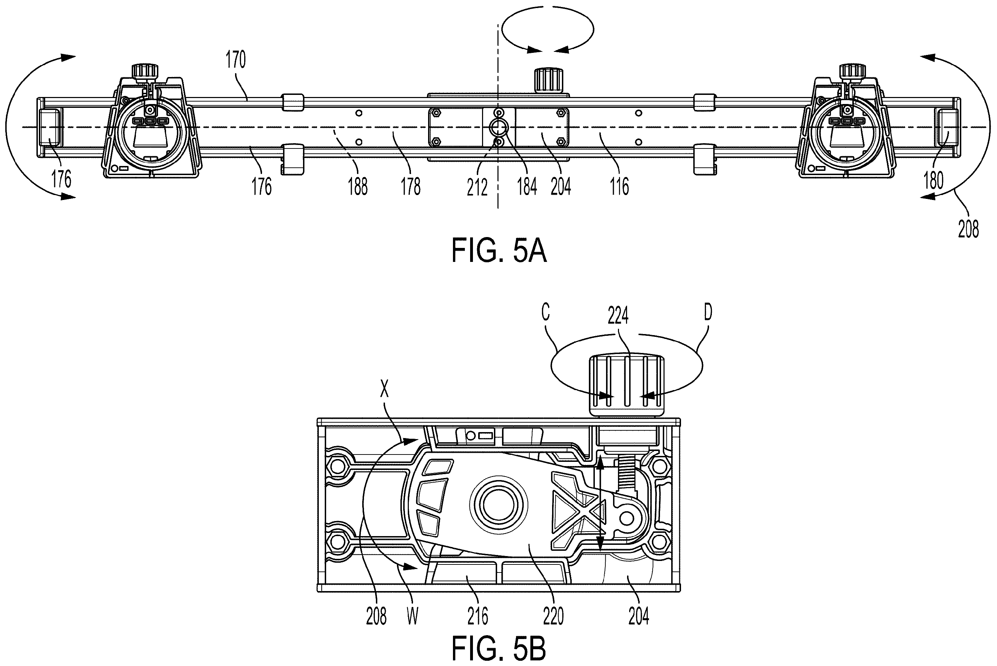

As shown in FIGS. 3, 4, and 5A, the frame 116 of the assembly 100 includes an elongated member having a first end 176, a second end 180 opposite the first end 176, a top side 170, a bottom side 174 opposite the top side 170, a front side 178, and a back side 182 opposite the front side 178. The frame 116 also defines a mid-point 184 midway between the first end 176 and the second end 180, and a longitudinal reference axis 188 that extends along the length of the frame 116 (e.g., between the first end 176 and the second end 180) at the cross-sectional middle thereof. In the illustrated embodiment, the frame 116 has an overall curved shape with a constant radius of curvature (e.g., the reference axis 188 is curved). However, in other embodiments, different curvilinear shapes may be present. In still other embodiments, the frame 116 may be linear.

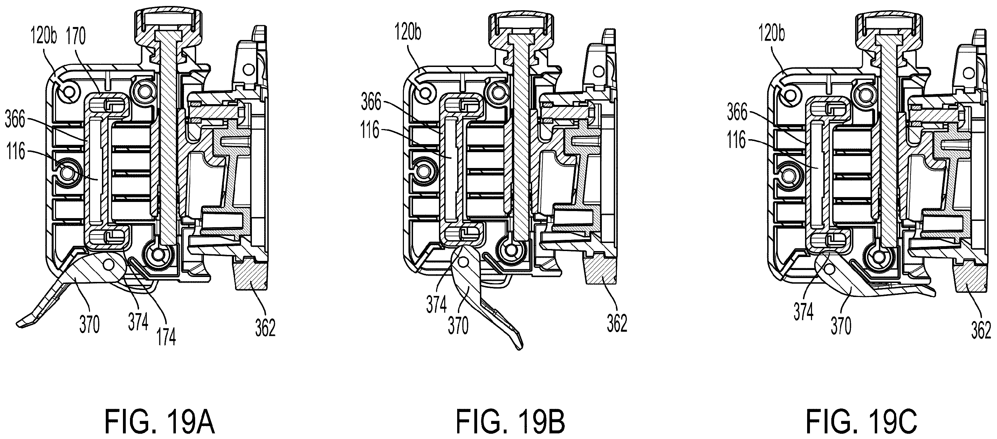

The cross-sectional shape of the frame 116 taken normal to the longitudinal axis 188 is substantially "C-shaped" (see FIGS. 19A-19C) having an enlarged top 170 and bottom 174 with a relatively narrower middle extending therebetween. In the illustrated embodiment, the open end of the C-shape forms the front side 178 and the closed end of the C-shape forms the back side 182. It is understood that in other embodiments different cross-sectional shapes may be used.

The frame 116 also includes a coupler 204 extending between and operatively engaging both the mount 144 of the support 112 and the frame 116 to provide one or more degrees of freedom therebetween. In some embodiments, the coupler 204 is configured to provide one degree of freedom between the frame 116 and the mount 114 so that, when used in conjunction with the mount 144, the frame 116 has three degrees of freedom with respect to the second end 132 of the support 112. In the illustrated embodiment, the degree of freedom 208 provided by the coupler 204 allows the frame 116 to rotate with respect to the mount 144 (e.g., the second portion 164 of the mount 144) about a second sub-axis 212 that is oriented perpendicular to both the mount axis 140 and the first sub-axis 156. In other embodiments, the coupler 204 may be configured to provide one or more degrees of freedom between the frame 116 and a foundational element. In still other embodiments, the coupler 204 may be adjustable between a locked or fixed configuration, in which the frame 116 is not movable relative to the support 112 and/or foundational element, and an unlocked configuration, in which the frame 116 is movable relative to the support 112 and/or foundational element about the provided one or more degrees of freedom.

In some embodiments, the coupler 204 includes a first portion 216 coupled to the back side 182 of the frame 116, a second portion 220 movable relative to the first portion 216 about the second sub-axis 212, and an actuator 224 operatively engaging both the first portion 216 and the second portion 220. During use, the second portion 220 of the coupler 204 is removably couplable to the second portion 164 of the support 112 to transmit forces therebetween. In the illustrated embodiment, the second portion 220 of the coupler 204 is fixed relative to the second portion 164 of the support 112 when coupled thereto.

In the illustrated embodiment, the actuator 224 includes a threaded rod in threadable engagement with one of the first portion 216 and the second portion 220 such that rotation of the actuator 224 with respect to the one of the first portion 216 and the second portion 220 causes the second portion 220 to move (e.g., rotate about the second sub-axis 212) with respect to the first portion 216. Specifically, rotating the actuator 224 in a first direction C causes the second portion 220 to rotate in a first direction X relative to the first portion 216 about the second sub-axis 212 and rotating the actuator 224 in a second direction D, opposite the first direction C, causes the second portion 220 to rotate in a second direction W relative to the first portion 216, opposite the first direction X, about the second sub-axis 212. In still other embodiments, the threads of the actuator 224 are such that when the rod 228 is not rotated the relative positions of the first portion 216 and the second portion 220 remain fixed.

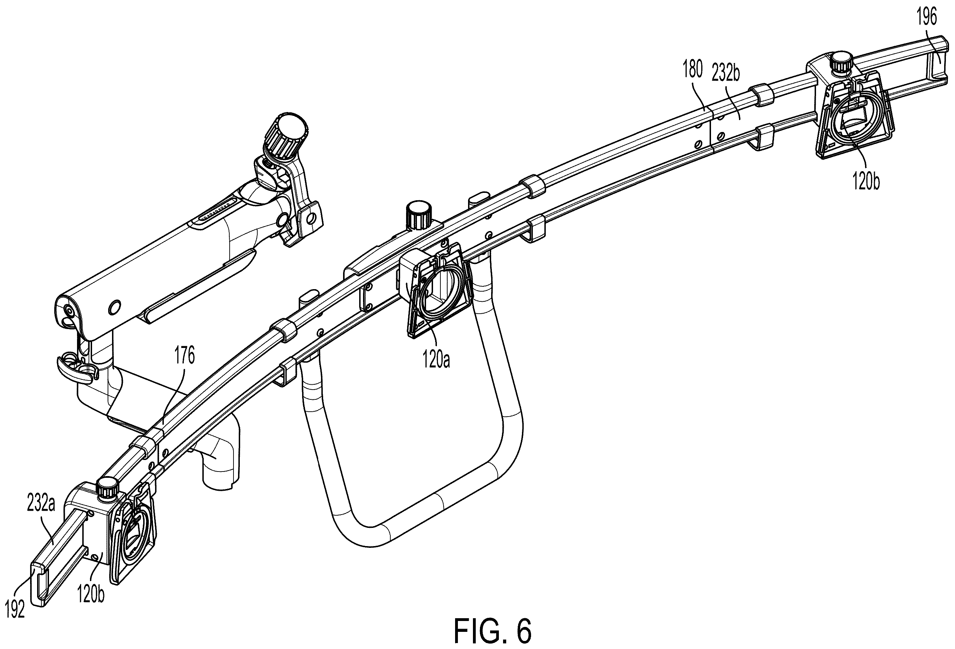

In some embodiments, the frame 116 may also include one or more extensions 232a, 232b, each of which can be removably coupled to one of the first end 176 and the second end 180 of the frame 116 to increase the overall longitudinal length of the resulting structure. More specifically, when no extensions 232a, 232b are attached to the frame 116 the working longitudinal length of the frame 116 extends generally between the first end 176 and the second end 180. Upon attachment of two extensions 232a, 232b (e.g., a first extension 232a extending from the first end 176 and a second extension 232b extending from the second end 180, see FIG. 6) extends the working longitudinal length of the resulting assembly from between the first extended end 192 of the first extension 232a and the second extended end 196 of the second extension 232b.

In some embodiments, each extension 232a, 232b has a cross-sectional shape that mirrors the cross-sectional shape of the frame 116 so that a fixture 120 can travel along and between both the frame 116 and attached extension 232a, 232b during use. In the illustrated embodiment, each extension 232a, 232b is coupled to the first and second ends 176, 180 of the frame 116 via an insertable tab 240 and fasteners. However, it is understood that in other embodiments different types of connection may also be used.

The assembly 100 includes one or more fixtures 120 movably coupled to the frame 116 (or an extension 232a, 232b attached to the frame 116) and configured to serve as a mounting location to which a corresponding screen or monitor 104 may be attached. During use, each fixture 120 provides one or more degrees of freedom of movement between the corresponding monitor 104 and the frame 116 independent of all other fixtures 120 (when present). In the illustrated embodiment, the assembly 100 includes a central fixture 120a mounted to the frame 116 proximate the mid-point 184 thereof and one or more lateral fixtures 120b mounted to either side of the central fixture 120a. It is understood that while the illustrated assembly 100 includes three total fixtures (e.g., one central fixture 120a and two lateral fixtures 120b), in other embodiments more of fewer fixtures 120 may be present depending on the number of screens 104 intended to be supported.

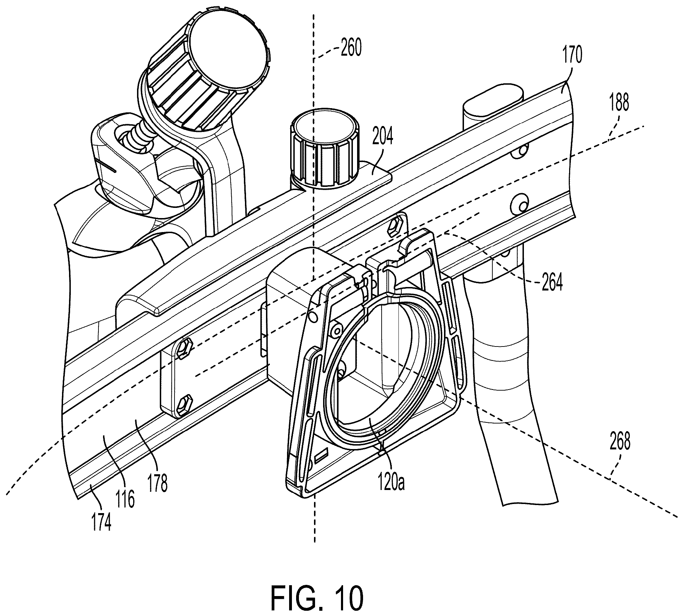

As shown in FIGS. 10-11C, the central fixture 120a is coupled to the frame 116 proximate the mid-point 184 thereof. In some embodiments, the central fixture 120a may be coupled to the frame 116 opposite the location where the coupler 204 is located (e.g., the central fixture 120a is mounted on the front side 178 opposite the coupler 204 mounted on the back side 182). In still other embodiments, the central fixture 120a may be mounted to the frame 116 such that it is not adjustable along the longitudinal axis 188 thereof (e.g. the central fixture 120a is coupled in a fixed position along the longitudinal axis 188).

During use, the central fixture 120a provides three degrees of freedom 244, 248, 252 between the attached monitor 104 (e.g., the mount plate 288) and the frame 116 with each degree of freedom 244, 248, 252 being independently adjustable. However, in other embodiments, more or fewer degrees of freedom may be provided. In the illustrated embodiment, the central fixture 120a is adjustable between a locked or fixed configuration, in which the mount plate 288 is fixed relative to the frame, and an unlocked configuration, in which the mount plate 288 is movable relative to the frame.

In some embodiments, the central fixture 120a provides a first degree of freedom 244 allowing the monitor 104 attached thereto to translate along a first sub-axis 260 oriented perpendicular to the longitudinal axis 188 of the frame 116. As shown in FIG. 10, the first sub-axis 260 is oriented perpendicular to the longitudinal axis 188 and passes through both the top and bottom 170, 174 of the frame 116. The central fixture 120a also provides two additional degrees of freedom 248, 252 by allowing the monitor 104 to pivot with respect to the fixture 120a. Specifically, the second degree of freedom 248 includes allowing the monitor 104 to pivot about a first pivot axis 264 that is parallel to the longitudinal axis 188 of the frame 116, and the third degree of freedom 252 allows the monitor to pivot about a second pivot axis 268 that is perpendicular to the longitudinal axis 188 passing through the front side 178 and back side 182 of the frame 116. In some embodiments, the second pivot axis 268 is parallel to and in some instances co-axial with the second sub-axis 212 of the coupler 204.

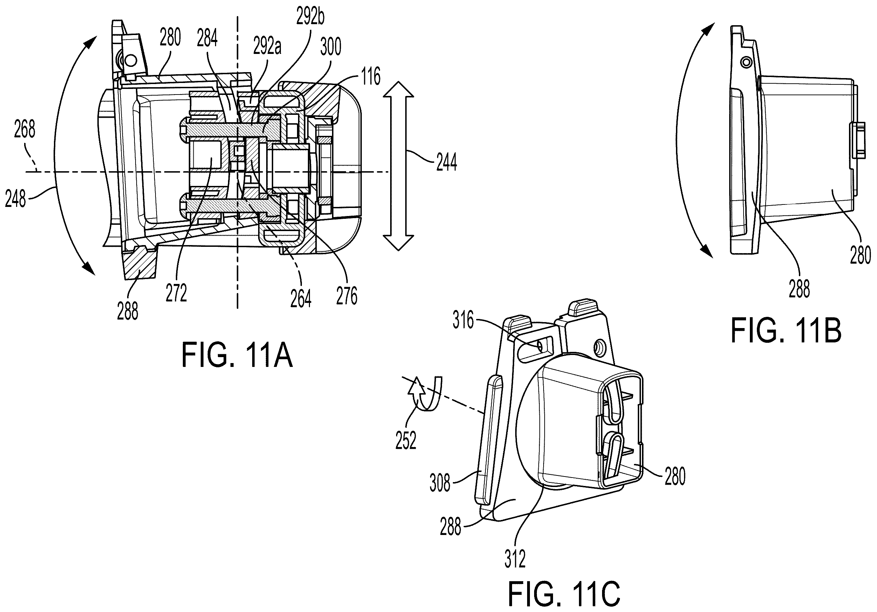

In the illustrated embodiment, the central fixture 120a includes an exterior pivot block 272, an interior pivot block 276, a pivot body 280 having a pivot wall 284, and a mount plate 288. Together, the exterior pivot block 272, the interior pivot block 276 and the pivot wall 284 form two or more sets of apertures 292a, 292b extending therethrough. When assembled, the pivot wall 284 of the pivot body 280 is captured between the interior and exterior pivot blocks 276, 272 and the resulting assembly is secured to the frame 116 by fasteners 300 passing through a select one of the two or more set of apertures 292a, 292b. As shown in FIG. 11A, the complementary surfaces of the pivot blocks 272, 276 and pivot wall 284 all share a common curvature.

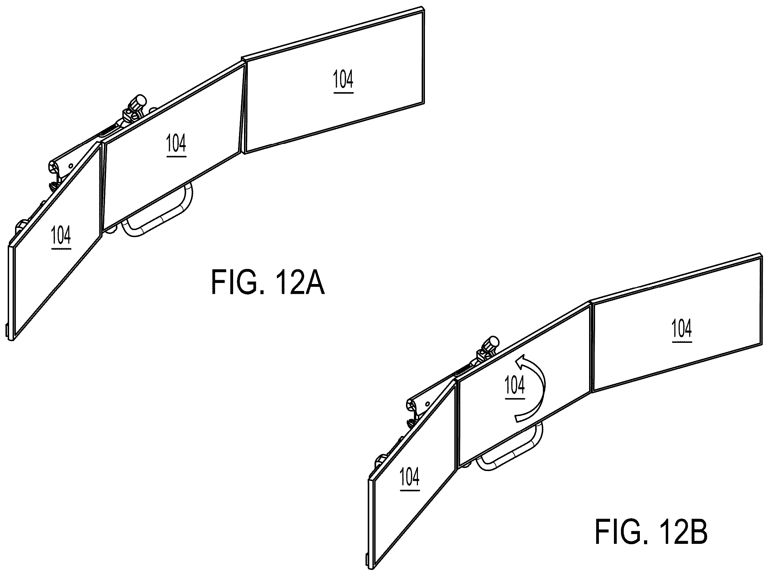

During use, the resulting assembly is adjustable between a first or unlocked configuration and a second or locked configuration. In the unlocked configuration, the fasteners 300 are loosened so that the pivot wall 284 of the pivot body 280 can move between the two pivot blocks 272, 276 allowing the pivot body 280 to rotate relative thereto about the first pivot axis 264 (e.g., move about the second degree of freedom 248; see FIGS. 12A and 12B). In the locked configuration, the fasteners 300 are tightened so that the pivot wall 284 is locked between the two pivot blocks 272, 276 and the three items 272, 276, 280 are fixed relative to each other.

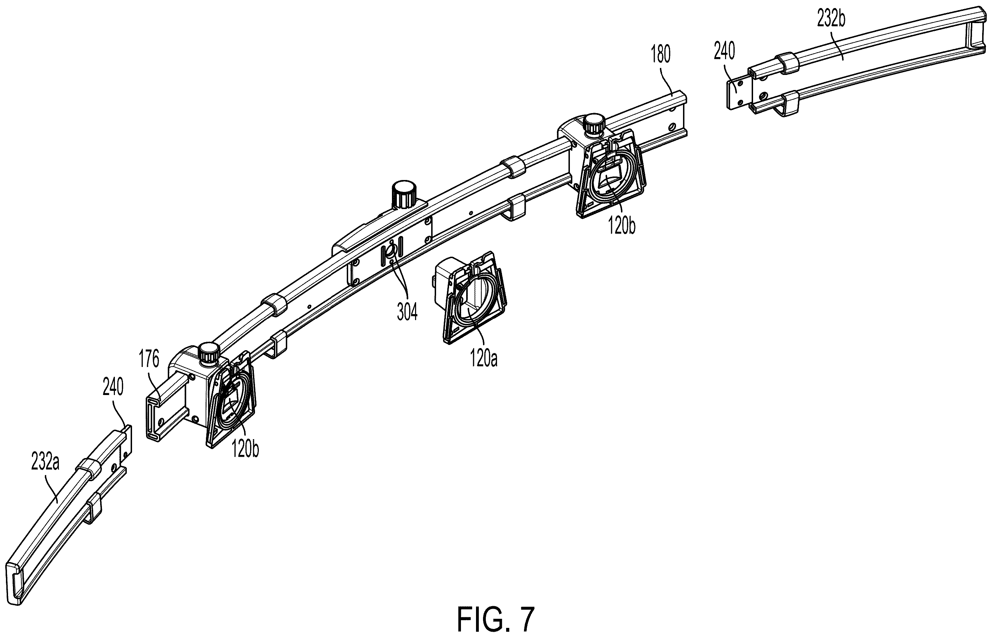

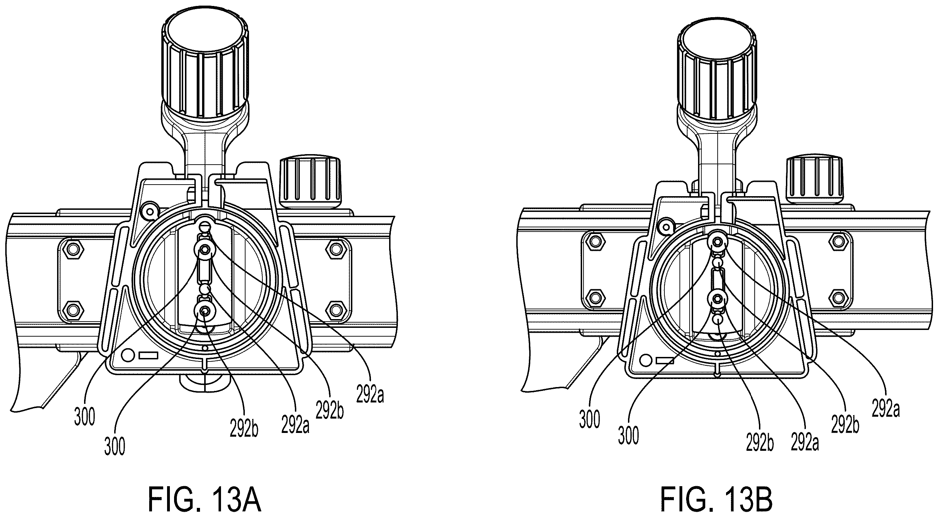

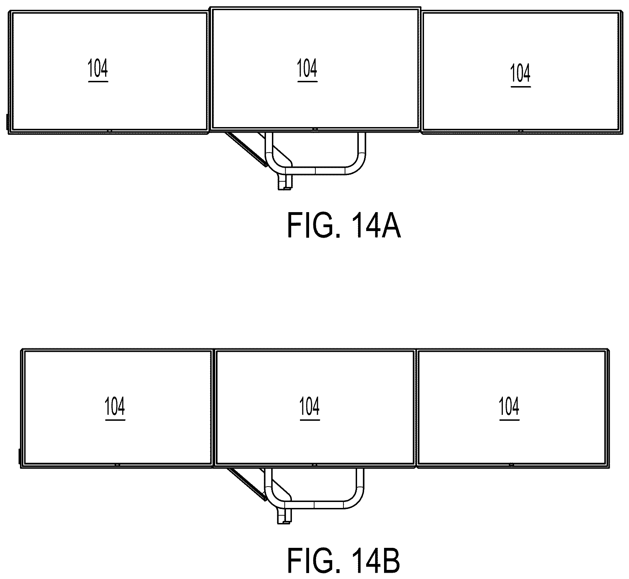

Furthermore, during use the two or more sets of apertures 292a, 292b allow the central fixture 120a to move about the first degree of freedom 244. Specifically, the two or more sets of apertures 292a, 292b are positioned so that a select set 292a, 292b will align with corresponding mounting apertures 304 in the frame 116 (see FIG. 7) when the central fixture 120a is located at a unique position along the first sub-axis 260. In the illustrated embodiment, the central fixture 120a includes two sets of apertures 292a, 292b such that the second set 292b aligns with the mounting apertures 304 of the frame 116 when the fixture 120a is in a relatively high position, (e.g., the fixture 120a is positioned closer to the top side 170 of the frame 116; see FIGS. 13A and 14A), and the first set 292a aligns with the mounting apertures 304 of the frame 116 when the fixture 120a is in a relatively low position (e.g., the fixture 120a is positioned closer to the bottom side 174 of the frame 116; see FIG. 13B and 14B). In other embodiments, more or fewer sets of apertures may be present to allow the central fixture 120a to be positioned in additional positions along the first degree of freedom 244.

The mount plate 288 of the central fixture 120a includes a first interface 308 that is configured to interact with the monitor or screen 104, and a second interface 312 that is configured to interact with the pivot body 280. When installed, the first interface 308 is configured to form a detachable but fixed connection with a given screen 104 so that the two elements move together as a unit. In the illustrated embodiment, the first interface 308 has a substantially trapezoidal perimeter shape including a series of ridges and grooves that interlock with corresponding ridges and grooves formed in the screen 104 (see FIG. 11C). However, in other embodiments different shapes and types of interfaces may be used.

During use, the second interface 312 is configured to allow the mount plate 288 and the screen 104 fixedly attached thereto to move with respect to the pivot body 280 about the third degree of freedom 252. More specifically the second interface 312 is configured to allow the mount plate 288 to rotate with respect to the pivot body 280 about the second pivot axis 268. In the illustrated embodiment, the second interface 312 includes a substantially circular in shape, however in other embodiments different shapes and types of interface may be present.

In some embodiments, the second interface 312 may also include a locking mechanism 316 adjustable between a first or locked configuration, in which the mount plate 288 is fixed relative to the pivot body 280, and a second or unlocked configuration, in which the mount plate 288 is movable relative to the pivot body 280 (e.g., can rotate about the second pivot axis 268). In the illustrated embodiment, the locking mechanism 316 includes a fastener configured to circumferentially tighten and loosen the second interface 312 about the exterior of the pivot body 280.

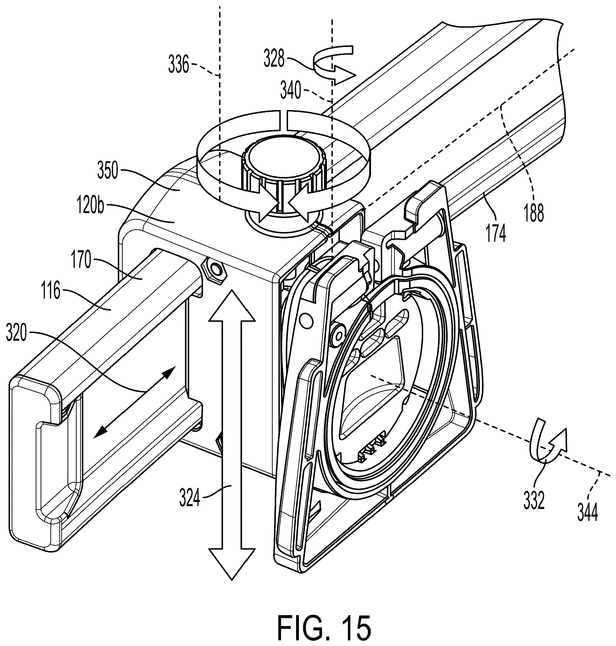

As shown in FIGS. 15-19C, each lateral fixture 120b is coupled to the frame 116 and configured to move along the longitudinal length thereof. During use, each lateral fixture 120b provides four degrees of freedom 320, 324, 328, 332 between the attached monitor 104 (e.g., the mount plate 362) and the frame 116 with each degree of freedom 320, 324, 328, 332 being independently adjustable. Each lateral fixture 120b is also independently adjustable relative to other lateral and the central fixtures 120a, 120b. In some embodiments, each lateral fixture 120b is adjustable between a locked or fixed configuration, in which the mount plate 361 is fixed relative to the frame 116, and an unlocked configuration, in which the mount plate 361 is movable relative to the frame 116.

While the illustrated lateral fixtures 120b each provide four degrees of freedom between the frame 116 and attached monitor 104, it is understood that in other embodiments more or fewer degrees of freedom may be present. Furthermore, while the illustrated lateral fixture 120b includes more degrees of freedom than the central fixture 120a, it is understood that in other embodiments each fixture type may provide the same, or different combinations of degrees of freedom between the attached monitor 104 and the frame 116.

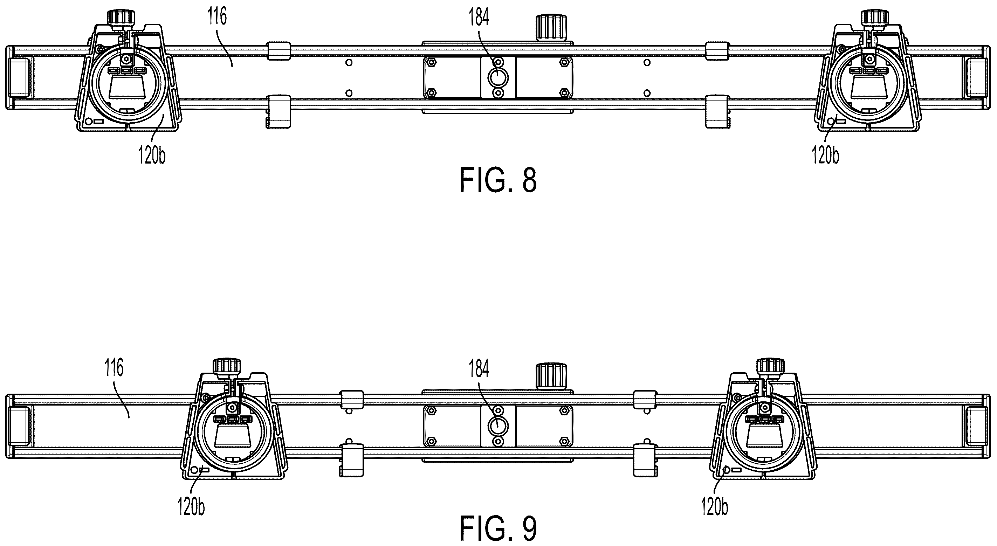

In some embodiments, each lateral fixture 120b provides a first degree of freedom 320 allowing the fixture 120b and attached monitor 104 to slide axially along the longitudinal axis 188 of the frame 116. More specifically, in some embodiments a given fixture 120b may slide longitudinally along the frame 116 between a first position proximate the central fixture 120a (e.g., proximate the mid-point 184; see FIG. 9) and a second position proximate the working end of the frame 116 (e.g., proximate the first and second ends 176, 180 when no extensions 232a, 232b are present or adjacent the extended ends 192, 196 when the extensions 232a, 232b are present; see FIGS. 6 and 8). In other embodiments, the fixtures 120b may slide along the entire longitudinal length of the frame 116.

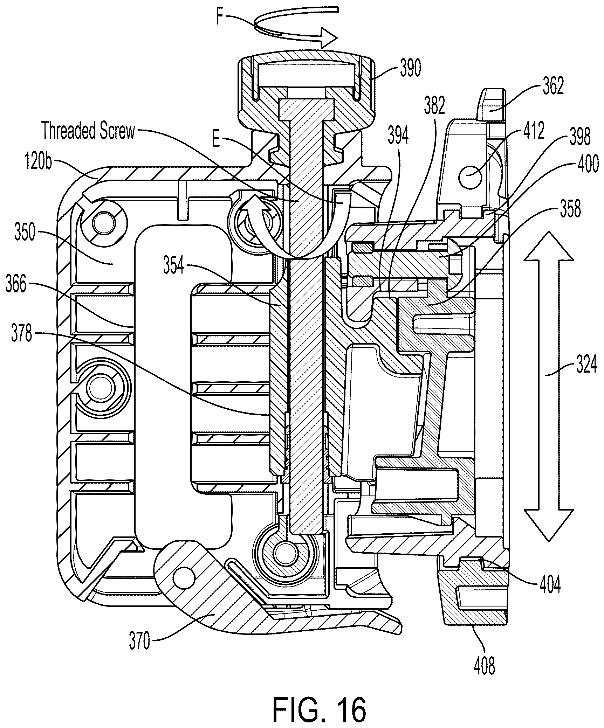

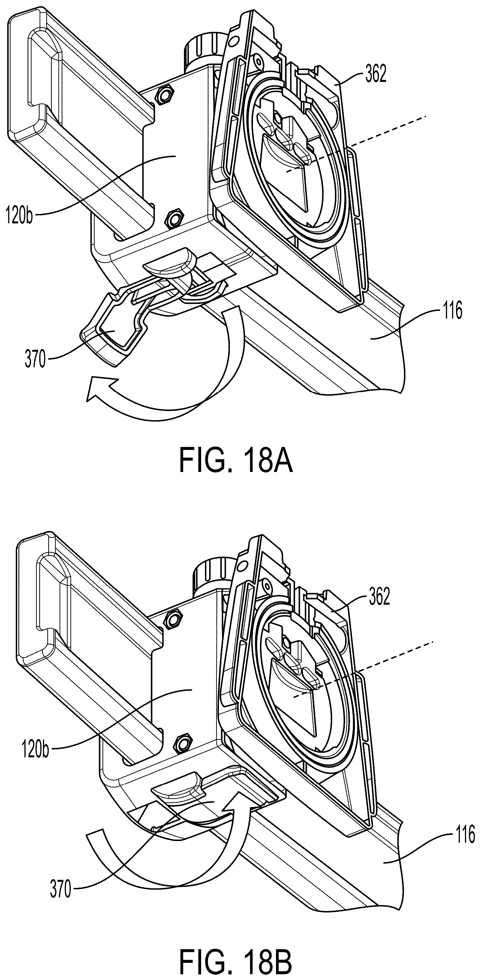

Each lateral fixture 120b also provides a second degree of freedom 324 allowing the monitor 104 to translate along a first sub-axis 336 oriented perpendicular to the longitudinal axis 188 of the frame 116. As shown in FIGS. 15 and 16, the first sub-axis 336 is oriented perpendicular to the longitudinal axis 188 and passes through both the top and bottom 170, 174 of the frame 116. Each lateral fixture 120b also provides two additional degrees of freedom 328, 332 by allowing the monitor 104 to pivot with respect to the fixture 120b. Specifically, the third degree of freedom 328 includes allowing the monitor 104 to pivot about a first pivot axis 340 that is parallel to the first sub-axis 336, and the fourth degree of freedom 332 includes allowing the monitor 104 to pivot about a second pivot axis 344 that is perpendicular to the longitudinal axis 188 and the first pivot axis 340 passing through the front side 178 and back side 182 of the frame 116 (see FIG. 18A and 18B).

In the illustrated embodiment, each lateral fixture 120b includes a body 350, a first sub-frame 354 movably coupled to the body 350, a second movable sub-frame 358 movably coupled to the first sub-frame 354, and a mount plate 362. As shown in FIGS. 15 and 16, the body 350 of the lateral fixture 120b is substantially rectangular in shape defining a passage 366 therethrough that is open to the exterior of the body 350 in two places. The passage 366, in turn, is sized and shaped so that the frame 116 can pass through the passage 366 such that the lateral fixture 120b can be supported thereon. As show in FIGS. 18A-19C, the passage 366 has a size and shape that substantially corresponds with the cross-sectional shape of the frame 116 (discussed above). To note, the cross-sectional shape of the passage 366 and the frame 116 are such that the body 350 does not rotate relative to the frame 116, but only translates along the frame 116 (e.g., axially along the longitudinal axis 188).

In some embodiments, the body 350 also includes a locking mechanism 370. During use, the locking mechanism 370 is adjustable between a locked configuration (see FIG. 19C), in which the body 350 is fixed and cannot travel along the frame 116, and an unlocked configuration (see FIG. 19A), in which the body 350 is free to translate longitudinally along the frame 116 as discussed above. In the illustrated embodiment, the locking mechanism 370 includes a pivoting lever having a cammed surface 374 incorporated thereon. The cammed surface 374 is such that when the mechanism 370 is in the locked configuration the cammed surface 374 engages the frame 116 and secures the body 350 relative thereto via friction. In contrast, when the mechanism 370 is in the unlocked configuration, the cammed surface 374 does not engage the frame 116 allowing the two items to move relative to each other. While the illustrated locking mechanism 370 is a pivoting lever, it is understood that in other embodiments different forms of locking may be used.

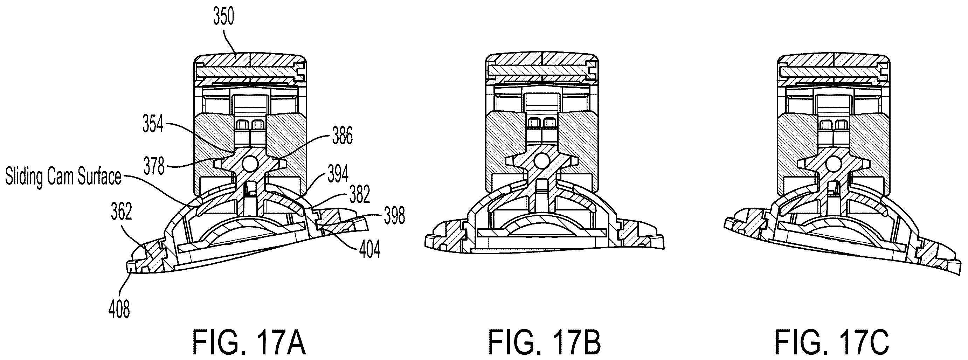

The first sub-frame 354 of the lateral fixture 120b includes a first interface 378 that is configured to interact with the body 350, and a second interface 382 that is configured to interact with the second sub-frame 358. When installed, the first interface 378 is configured so that the first sub-frame 354 moves axially along the first sub-axis 336 to produce the second degree of freedom 324 between the frame 116 and the monitor 104. As shown in FIG. 17A-17C, the first interface 378 includes an elongated channel 386 defined into the body 350 into which the first sub-frame 354 is positioned. In the illustrated embodiment, the channel 386 allows translation along the first sub-axis 336 but restricts any relative rotational movement between the first sub-frame 354 and the body 350.

The first interface 378 also includes an actuator 390 to move the first sub-frame 354 relative to the body 350 during operation. In the illustrated embodiment, the actuator 390 includes a threaded rod rotatably mounted but axially fixed to the body 350 and threadably engaging the first sub-frame 354 such that rotation of the actuator 390 with respect to the body 350 causes the first sub-frame 354 to move (e.g., translate axially along the first sub-axis 336) with respect to the body 350. Specifically, rotating the actuator 390 in a first direction E causes the first sub-frame 354 to move upwardly (e.g., toward to the top 170 of the frame 116) while rotating the actuator 390 in a second direction F, opposite the first direction E, causes the first sub-frame 354 to move downwardly (e.g., toward the bottom 174 of the frame 116). In still other embodiments, the threads of the actuator 390 are such that when the actuator 390 is not rotated the relative positions of the body 350 and the first sub-frame 354 remain fixed.

The second sub-frame 358 of the lateral fixture 120b includes a third interface 394 configured to interact with the second interface 382 of the first sub-frame 354, and a fourth interface 398 configured to interact with the mount plate 362. As shown in FIGS. 17A-17C, the third interface 394 includes a curved or cammed surface that is captured between the second interface 382 of the first sub-frame 364 and the body 350.

During use, the third interface 394 is adjustable between a first or unlocked configuration, in which the curved surface is free to slide between the second interface 382 and the body 350 to allow the second sub-frame 358 to pivot relative thereto about the first pivot axis 340 (e.g., providing the third degree of freedom 328), and a second or locked configuration, in which the curved surface is frictionally locked in place such that the second sub-frame 358 is fixed relative to the first sub-frame 354. In the illustrated embodiment, a fastener 400 is used to adjust the third interface 394 between the locked and unlocked configurations.

The mount plate 362 of the lateral fixture 120b is substantially similar to the mount plate 288 of the central fixture 120a discussed above. The mount plate 362 includes a fifth interface 404 that is configured to interact with the monitor or screen 104, and a sixth interface 408 that is configured to interact with the fourth interface 398 of the second sub-frame 358. When installed, the fifth interface 404 is configured to form a detachable but fixed connection with a given screen 104 so that the two elements move together as a unit. In the illustrated embodiment, the fifth interface 404 has a substantially trapezoidal perimeter shape including a series of ridges and grooves that interlock with corresponding ridges and grooves formed in the screen 104 (see FIG. 11C). However, in other embodiments different shapes and types of interfaces may be used.

During use, the sixth interface 408 is configured to allow the mount plate 362 and the screen 104 fixedly attached thereto to move with respect to the second sub-frame 358 about the fourth degree of freedom 332. More specifically the sixth interface 408 is configured to allow the mount plate 362 to rotate with respect to the second sub-frame 358 about the second pivot axis 344. In the illustrated embodiment, the sixth interface 408 is substantially circular in shape, however in other embodiments different shapes and types of interface may be present.

In some embodiments, the sixth interface 408 may also include a locking mechanism 412 adjustable between a first or locked configuration, in which the mount plate 362 is fixed relative to the second sub-frame 358, and a second or unlocked configuration, in which the mount plate 362 is movable relative to the second sub-frame 358 (e.g., can rotate about the second pivot axis 344). In the illustrated embodiment, the locking mechanism 412 includes a fastener configured to circumferentially tighten and loosen the sixth interface 408 about the exterior of the second pivot body 358.

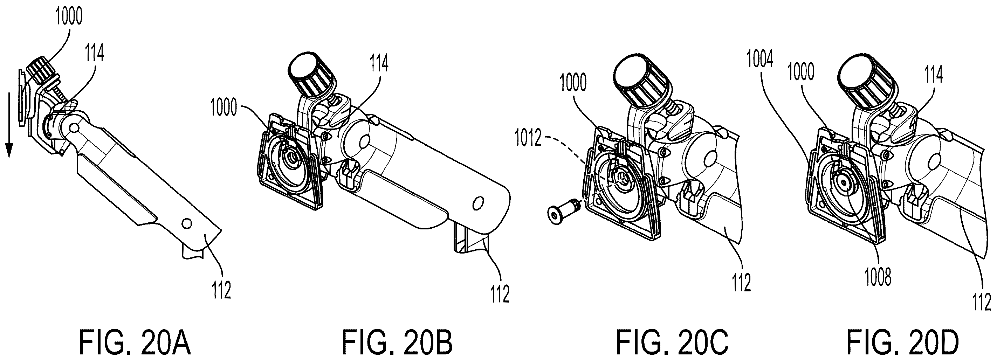

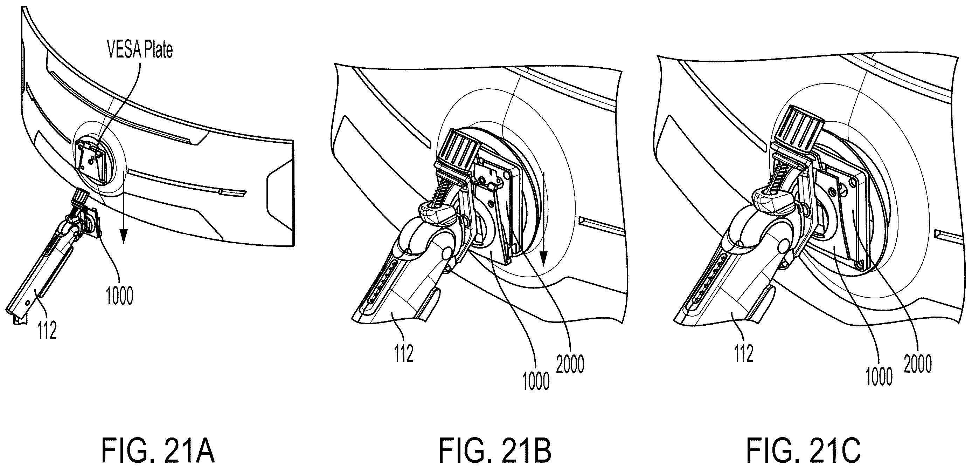

As shown in FIGS. 20A-20D, in some embodiments a mount plate 1000 may be used separately from the above-described assembly 100 and instead be coupled directly to the mount 114 of the support 112. Specifically, the mount plate 1000 includes a first interface 1004 configured to interact with a corresponding monitor of screen (as described above) and a second interface 1008 for coupling directly to the mount 114 of the support 112. In the illustrated embodiment, the second interface 1008 includes a slot for the plate 1000 to slide onto the mount 114 (see FIG. 20A), and an aperture 1012 for securing the plate 1000 in place (see FIGS. 20B-20D). Once attached to the mount 114, the second interface 1008 of the plate 1000 may be coupled to a monitor (see FIGS. 21A-21C).

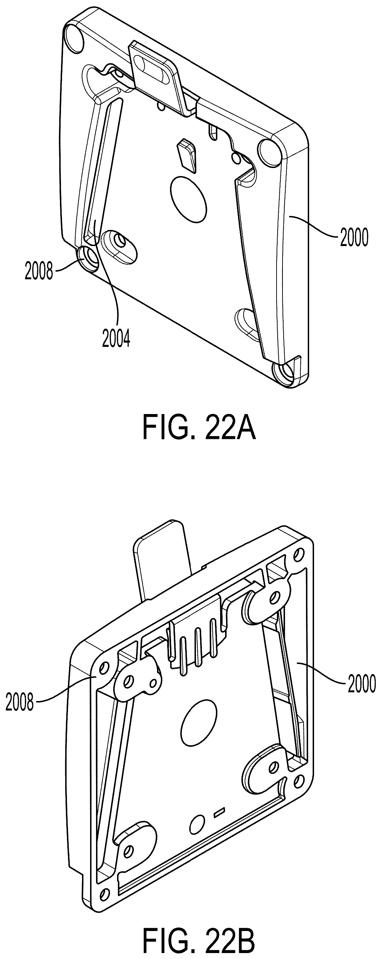

In instances where a monitor 104 does not include a connection sized and shaped to correspond with the second interface 1008 of the plate 1000, an adapter 2000 may be used (see FIGS. 22A and 22B). Such an adapter 2000 includes a first interface 2004 that corresponds with the second interface 1008 of the mounting plate 1000, and a second interface 2008 that mirrors the mounting system of the monitor or screen to me supported. In the illustrated embodiment, the second interface 2008 of the adapter 2000 includes a series of four apertures sized to receive individual screws or bolts therein.

To align a group of screens 104 using the above-described mount assembly 100, the user first prepares the first tier of adjustments by attaching and aligning the individual monitors 104 with respect to one-another to create the fixed screen unit 108.

In embodiments where a three-screen unit 108 is to be prepared (see FIG. 6), a first monitor 104 is attached to the central fixture 120a. To do so, the second interface 312 of the mount plate 288 is attached to the first monitor 104 such that the monitor 104 and plate 288 become fixedly coupled together.

With the first monitor 104 attached to the central fixture 120a, the second and third monitors 104 may then be attached to the two remaining lateral fixtures 120b. To do so, the sixth interface 408 of the corresponding mounting plate 362 of each fixture 120b is a corresponding monitor 104 such that the monitor 104 and plate 362 become fixedly coupled together.

In embodiments where a two-screen unit 108 is to be prepared (see FIG. 1), the stages regarding the central fixture 120a may be omitted.

With all three monitors 104 attached, the relative position of the three monitors 104 may then be adjusted using the three degrees of freedom 244, 248, 252 of the central fixture 120a and the four degrees of freedom 320, 324, 328, 332 available via the two lateral fixtures 120b. Together, the degrees of freedom provided by the central fixture 120a and lateral fixtures 120b form a first set of adjustments or degrees of freedom. The first set of adjustments, in turn, forms the first tier of adjustment. When doing so (e.g., when using the first tier of adjustment provided by the fixtures 120a, 120b), the frame 116 itself is not moved or adjusted.

After the necessary adjustments are made, the three monitors 104 may be locked into position to secure the resulting fixed screen unit 108 (e.g., the first set of adjustments are locked so the relative position and orientation of each screen 104 with respect to one another and with respect to the frame 116 is fixed). Each degree of freedom may be "locked" according to its design. For example, the first and second degrees of freedom 244, 248 of the central fixture 120a may be locked in place by locating and tightening the fasteners 300 contained therein. Furthermore, the third degree of freedom 252 of the central fixture 120a may be locked by securing the locking mechanism (e.g., fastener) 316 in the mount plate 288. For the lateral fixtures 120b, the first degree of freedom 320 may be locked by placing the latch or locking mechanism 370 in the locked configuration. To lock the second degree of freedom 324 of the lateral fixtures 120b, the user need only stop rotating the threaded actuator 390. Finally, the third degree of freedom 328 can be locked by tightening fastener 400 of the second sub-frame 358 and the fourth degree of freedom 332 can be locked by tightening fastener 412 in the mount plate 362.

With the relative orientation and position of the three monitors 104 secured, the user may then use the second tier of adjustments to move the resulting screen unit 108. To do so, the user may manipulate the location and orientation of the frame 116 relative to a foundational element (e.g., a table, a wall, a floor, and the like). When doing so, the relative positioning of the monitors 104 (e.g., the relative positioning of the mounting plates 288, 362) within the screen unit 108 will be maintained. Specifically, the user may adjust the three degrees of freedom 148, 152 provided by the mount 144 and single degree of freedom 208 provided by the coupler 204. A handle 3000 is also provided to allow the user to manually adjust the position of the frame 116. In some embodiments, the second tier of adjustment may include a second set of degrees of freedom or adjustments that is independent from the first set of degrees of freedom the degrees of freedom or adjustments producing the first tier of adjustment. In some embodiments, the second tier of adjustment may include a second set of adjustments including the degrees of freedom provided by the coupler 204. In other embodiments, the second tier of adjustment may include a second set of degrees of freedom including the degrees of freedom provided by the coupler 204 and the mount 144. In still other embodiments, the second tier of adjustments may include a second set of adjustments including the degrees of freedom provided by the coupler 204, the mount 144, and the support 112.

In some embodiments an adapter kit may be provided to change a two-monitor system as shown in FIG. 1 to a three-monitor system as shown in FIG. 6. In such embodiments, the kit may include a central fixture 120a and a pair of extensions 232a, 232b. To modify the two-monitor system to a three-monitor system, the two existing lateral fixtures 120b are moved toward the mid-point 184. Once positioned, the extensions 232a, 232b are coupled to the first and second end 176, 180, respectively, and secured using fasteners. Once attached, the central fixture 120a may be secured proximate the mid-point 184 via the fasteners 300.

### CLAUSES:

1. An adjustable mount assembly to support a first screen relative to a foundational element, the adjustable mount assembly comprising:
   a frame;
   a coupler coupled to the frame, wherein the coupler provides a first degree of freedom between the frame and the foundational element;
   a fixture coupled to the frame, wherein the fixture includes a mount plate configured for attachment to the first screen, wherein the fixture provides a second degree of freedom between the mount plate and the frame, and
   wherein adjustment about the first degree of freedom is independent of adjustment of the second degree of freedom.
2. The adjustable mount assembly of clause 1, wherein the fixture provides four degrees of freedom between the mount plate and the frame.
3. The adjustable mount assembly of clause 2, wherein the four degrees of freedom are independently adjustable.
4. The adjustable mount assembly of any preceding clause, wherein the frame defines a longitudinal reference axis extending along a length thereof, and wherein the fixture is movable axially along the longitudinal reference axis relative to the frame.
5. The adjustable mount assembly of any preceding clause, wherein the fixture is adjustable between a locked configuration, in which the mount plate is fixed relative to the frame, and an unlocked configuration, in which the mount plate is movable relative to the frame.
6. The adjustable mount assembly of clause 5, wherein the coupler is adjustable between a locked configuration, in which the frame is fixed relative to the foundational element, unlocked configuration, in which the frame is movable relative to the foundational element, and wherein the coupler may be adjusted between the locked and unlocked configurations independent of adjusting the fixture between the locked and unlocked configurations.
7. The adjustable mount assembly of any preceding clause, wherein the coupler includes a first interface configured for attachment to the foundational element, and wherein the frame is movable relative to the first interface.
8. The adjustable mount assembly of any preceding clause, wherein the fixture is a first fixture and the mount plate is a first mount plate, the adjustable mount assembly further comprising a second fixture attached to the frame, wherein the second fixture includes a second mount plate configured for attachment to a second screen, and wherein the second fixture provides a third degree of freedom between the second mount plate and the frame.
9. The adjustable mount assembly of clause 8, wherein the second mount plate is movable relative to the first mount plate.
10. The adjustable mount assembly of clause 8 or 9, wherein the frame is movable about the first degree of freedom without altering the relative position and orientation between the first mount plate and the second mount plate.
11. The adjustable mount assembly of any of clauses 8 to 10, further comprising a third fixture attached to the frame, wherein the third fixture includes a third mount plate configured for attachment to a third screen, and wherein the third fixture provides a fourth degree of freedom between the second mount plate and the frame.
12. The adjustable mount assembly of clause 11, wherein the frame includes a first end and a second end opposite the first end, and wherein the first fixture is movable along a length of the frame between the third fixture and the first end.
13. An adjustable mount assembly to support a first screen and a second screen relative to a foundational element, the adjustable mount assembly comprising:
   a frame;
   a first mount plate coupled to the frame and configured for attachment to one of the first screen and the second screen;
   a second mount plate coupled to the frame and configured for attachment to the other of the first screen and the second screen;
   a first set of adjustments configured to adjust at least one of the position and orientation of the first mount plate relative to the second mount plate; and
   a second set of adjustments configured to adjust at least one of the position and orientation of the frame relative to the foundational element while maintaining the relative position between the first mount plate and the second mount plate.
14. The adjustable mount assembly of clause 13, further comprising:
   a first fixture coupling the first mount plate to the frame;
   a second fixture coupling the second mount plate to the frame; and
   wherein the first fixture and the second fixture provide the first set of adjustments.
15. The adjustable mount assembly of clause 14, wherein the first fixture provides a first set of one or more degrees of freedom between the first mount plate and the frame, wherein the second fixture provides a second set of one or more degrees of freedom between the second mount plate and the frame, and wherein the first set of one or more degrees of freedom and the second set of one or more degrees of freedom provide the first set of adjustments.
16. The adjustable mount assembly of any of clauses 13 to 15, wherein the distance between the first mount plate and the second mount plate may be changed using the first set of adjustments.
17. The adjustable mount assembly of any of clause 13 to 16, further comprising:
   a coupler positioned between the frame and the foundational element, wherein the coupler provides the second set of adjustments.
18. A method of supporting a first screen and a second screen relative to a foundational element, the method comprising:
   providing a frame;
   supporting the frame relative to the foundational element such that at least one of the position and orientation of the frame is adjustable relative thereto;
   coupling a first fixture to the frame, the first fixture including a first mount plate configured for attachment to one of the first screen and the second screen;
   coupling a second fixture to the frame, the second fixture including a second mount plate configured for attachment to the other of the first screen and the second screen;
   adjusting at least one of the position and orientation of the first mount plate relative to the second mount plate using the first fixture and the second fixture to produce a screen unit;
   adjusting at least one of the position and orientation of the screen unit relative to the foundational element without changing the relative position and orientation of the first mount plate relative to the second mount plate.
19. The method of clause 18, wherein adjusting at least one of the position and orientation of the screen unit relative to the foundation element includes adjusting at least one of the position and orientation of the frame relative to the foundational element.
20. The method of clause 18 or 19, wherein adjusting at least one of the position and orientation of the first mount plate relative to the second mount plate includes adjusting at least one of the position and orientation of the first mount plate relative to the frame and adjusting at least one of the position and orientation of the second mount plate relative to the frame.

## Claims

1. An adjustable mount assembly to support a first screen relative to a foundational element, the adjustable mount assembly comprising:
a frame;
a coupler coupled to the frame, wherein the coupler provides a first degree of freedom between the frame and the foundational element;
a fixture coupled to the frame, wherein the fixture includes a mount plate configured for attachment to the first screen, wherein the fixture provides a second degree of freedom between the mount plate and the frame, and
wherein adjustment about the first degree of freedom is independent of adjustment of the second degree of freedom.

2. The adjustable mount assembly of claim 1, wherein the fixture provides four degrees of freedom between the mount plate and the frame.

3. The adjustable mount assembly of claim 2, wherein the four degrees of freedom are independently adjustable.

4. The adjustable mount assembly of any preceding claim, wherein the frame defines a longitudinal reference axis extending along a length thereof, and wherein the fixture is movable axially along the longitudinal reference axis relative to the frame.

5. The adjustable mount assembly of any preceding claim, wherein the fixture is adjustable between a locked configuration, in which the mount plate is fixed relative to the frame, and an unlocked configuration, in which the mount plate is movable relative to the frame, preferably the coupler is adjustable between a locked configuration, in which the frame is fixed relative to the foundational element, unlocked configuration, in which the frame is movable relative to the foundational element, and wherein the coupler may be adjusted between the locked and unlocked configurations independent of adjusting the fixture between the locked and unlocked configurations.

6. The adjustable mount assembly of any preceding claim, wherein the coupler includes a first interface configured for attachment to the foundational element, and wherein the frame is movable relative to the first interface.

7. The adjustable mount assembly of any preceding claim, wherein the fixture is a first fixture and the mount plate is a first mount plate, the adjustable mount assembly further comprising a second fixture attached to the frame, wherein the second fixture includes a second mount plate configured for attachment to a second screen, and wherein the second fixture provides a third degree of freedom between the second mount plate and the frame,
preferably:
the second mount plate is movable relative to the first mount plate; and/or
the frame is movable about the first degree of freedom without altering the relative position and orientation between the first mount plate and the second mount plate.

8. The adjustable mount assembly of claim 7, further comprising a third fixture attached to the frame, wherein the third fixture includes a third mount plate configured for attachment to a third screen, and wherein the third fixture provides a fourth degree of freedom between the second mount plate and the frame,
preferably the frame includes a first end and a second end opposite the first end, and wherein the first fixture is movable along a length of the frame between the third fixture and the first end.

9. An adjustable mount assembly to support a first screen and a second screen relative to a foundational element, the adjustable mount assembly comprising:
a frame;
a first mount plate coupled to the frame and configured for attachment to one of the first screen and the second screen;
a second mount plate coupled to the frame and configured for attachment to the other of the first screen and the second screen;
a first set of adjustments configured to adjust at least one of the position and orientation of the first mount plate relative to the second mount plate; and
a second set of adjustments configured to adjust at least one of the position and orientation of the frame relative to the foundational element while maintaining the relative position between the first mount plate and the second mount plate.

10. The adjustable mount assembly of claim 9, further comprising:
a first fixture coupling the first mount plate to the frame;
a second fixture coupling the second mount plate to the frame; and
wherein the first fixture and the second fixture provide the first set of adjustments, preferably the first fixture provides a first set of one or more degrees of freedom between the first mount plate and the frame, wherein the second fixture provides a second set of one or more degrees of freedom between the second mount plate and the frame, and wherein the first set of one or more degrees of freedom and the second set of one or more degrees of freedom provide the first set of adjustments.

11. The adjustable mount assembly of claim 9 or 10, wherein the distance between the first mount plate and the second mount plate may be changed using the first set of adjustments.

12. The adjustable mount assembly of any of claims 9 to 11, further comprising:
a coupler positioned between the frame and the foundational element, wherein the coupler provides the second set of adjustments.

13. A method of supporting a first screen and a second screen relative to a foundational element, the method comprising:
providing a frame;
supporting the frame relative to the foundational element such that at least one of the position and orientation of the frame is adjustable relative thereto;
coupling a first fixture to the frame, the first fixture including a first mount plate configured for attachment to one of the first screen and the second screen;
coupling a second fixture to the frame, the second fixture including a second mount plate configured for attachment to the other of the first screen and the second screen;
adjusting at least one of the position and orientation of the first mount plate relative to the second mount plate using the first fixture and the second fixture to produce a screen unit;
adjusting at least one of the position and orientation of the screen unit relative to the foundational element without changing the relative position and orientation of the first mount plate relative to the second mount plate.

14. The method of claim 13, wherein adjusting at least one of the position and orientation of the screen unit relative to the foundation element includes adjusting at least one of the position and orientation of the frame relative to the foundational element.

15. The method of claim 13 or 14, wherein adjusting at least one of the position and orientation of the first mount plate relative to the second mount plate includes adjusting at least one of the position and orientation of the first mount plate relative to the frame and adjusting at least one of the position and orientation of the second mount plate relative to the frame.
